# EUROPÄISCHE PATENTSCHRIFT

(11) **EP 3 027 936 B1**
(45) Veröffentlichungstag und Bekanntmachung des Hinweises auf die Patenterteilung: **24.05.2017**
(21) Anmeldenummer: 14741271.2
(22) Anmeldetag: 16.07.2014
(51) Int. Cl.: F16H 61/16, F16H 59/54

(54) **VERFAHREN ZUR STEUERUNG UND/ODER REGELUNG EINES ZWEISTUFIGEN UNTERSETZUNGSGETRIEBES EINES KRAFTFAHRZEUGES**
METHOD FOR CONTROLLING AND/OR REGULATING A TWO-STAGE REDUCTION GEARBOX OF A MOTOR VEHICLE
PROCÉDÉ PERMETTANT DE COMMANDER ET/OU DE RÉGULER UN RÉDUCTEUR À DEUX ÉTAGES D'UN VÉHICULE AUTOMOBILE

(30) Priorität: 31.07.2013 DE 102013012782
(43) Veröffentlichungstag der Anmeldung: 08.06.2016
(73) Patentinhaber: Volkswagen Aktiengesellschaft, 38440 Wolfsburg (DE)
(72) Erfinder: WILLMANN, Christian, 38442 Wolfsburg (DE); BROSKA, Manfred, 38440 Wolfsburg (DE); BENNAT, Bertram, 38440 Wolfsburg (DE); ARNOLD, Peter, 38442 Wolfsburg (DE)
(86) Internationale Anmeldenummer: PCT/EP2014/065284
(87) Internationale Veröffentlichungsnummer: WO 2015/014619

(56) Entgegenhaltungen:
- DE-A1- 10 325 354
- GB-A- 2 304 835
- US-A1- 2012 029 781
- US-A1- 2013 006 485

## Beschreibung

Die Erfindung betrifft ein Verfahren zur Steuerung und/oder Regelung eines zweistufigen Untersetzungsgetriebes eines Kraftfahrzeuges mit den Merkmalen des Oberbegriffes des Patentanspruches 1.

Aus der DE 103 25 354 A1 ist ein Verfahren zur Steuerung oder Regelung eines zweistufigen Untersetzungsgetriebes eines Kraftfahrzeuges bekannt. Ein Antriebsstrang des Kraftfahrzeuges weist einen Antriebsmotor, ein Hauptgetriebe in Form eines Automatikgetriebes und ein nachgeordnetes Untersetzungsgetriebe in Form eines Verteilergetriebes auf. Es sind zwei Fahrstufen des Untersetzungsgetriebes schaltbar, nämlich eine hohe Fahrstufe und eine niedrige Fahrstufe mit unterschiedlichen Übersetzungen. Die hohe Fahrstufe kann auch als "high gear" oder Straßengang und die niedrige Fahrstufe kann als "low gear" oder Geländegang bezeichnet werden. Mittels des Verteilergetriebes kann ferner zwischen Zwei- und Vierradantrieb umgeschaltet werden. Die Schaltanforderung kann vom Fahrzeugführer beispielsweise durch Betätigung eines Schalters im Innenraum ausgelöst werden. Alternativ dazu kann die Schaltanforderung automatisch durch eine Steuerungseinrichtung in Abhängigkeit von Betriebsgrößen des Kraftfahrzeugs und von Umweltgrößen generiert werden. Liegt eine Schaltanforderung vor wird danach die sich ohne Schaltung im Automatikgetriebe einstellende Drehzahl des Antriebsmotors anhand der aktuellen Geschwindigkeit und den Übersetzungen im Antriebsstrang ermittelt. Zur Erhöhung der Genauigkeit der Berechnung wird die Geschwindigkeit des Kraftfahrzeuges bei Abschluss der Schaltung aus einer abgespeicherten Dauer der Schaltung, der aktuellen Geschwindigkeit, der aktuellen Beschleunigung und dem Fahrwiderstand, beispielsweise hervorgerufen durch einen Rollwiderstand oder eine Steigung, vorausberechnet. Hiernach wird geprüft, ob die angeforderte Schaltung durchgeführt werden kann. Dazu wird als erstes geprüft, ob die berechnete Drehzahl der Antriebsmaschine innerhalb eines erlaubten Bereiches liegt. Falls die berechnete Drehzahl der Antriebsmaschine außerhalb des erlaubten Bereiches liegt, wird in einem zweiten Schritt geprüft, ob die Drehzahl der Antriebsmaschine durch eine entsprechende Schaltung des Automatikgetriebes in den erlaubten Bereich gebracht werden kann. Beispielsweise könnte die Drehzahl in den erlaubten Bereich dadurch gebracht werden, dass das Untersetzungsgetriebe aus dem Straßengang in den Geländegang schaltet und vorher das Automatikgetriebe von dem zweiten in den vierten Gang schaltet. Fällt diese Prüfung negativ aus, so kann die geforderte Schaltung nicht ausgeführt werden. Die Schaltanforderung wird unterdrückt und der Schaltvorgang wird beendet.

Aus der GB 2 304 835 A ist ein Verfahren zur Steuerung und/oder Regelung eines zweistufigen Untersetzungsgetriebe eines Kraftfahrzeuges bekannt. Das Kraftfahrzeug weist einen Antriebsmotor, ein Hauptgetriebe in Form eines Automatikgetriebes und das nachgeordnete Untersetzungsgetriebe auf. Das Untersetzungsgetriebe stellt zwei Fahrstufen, nämlich eine hohe Fahrstufe und eine niedrige Fahrstufe bereit. Das Kraftfahrzeug ist insbesondere als Geländefahrzeug ausgebildet, wobei die niedrige Fahrstufe als Geländegang dient. Das Kraftfahrzeug weist einen Schalter auf, um zwischen der hohen Fahrstufe und der niedrigen Fahrstufe durch eine Schaltanforderung des Fahrers umzuschalten. Wird eine Umschaltung vom Fahrer mittels des Schalters angefordert, so wird im Automatikgetriebe zunächst eine Neutralstellung gewählt. Ein Steuergerät bestimmt danach die optimale Übersetzung, um die Geschwindigkeit des Kraftfahrzeuges aufrecht zu erhalten. Dabei wird das Drehmoment und die Drehzahl des Antriebsmotors und die Fahrzeuggeschwindigkeit berücksichtigt, um den optimalen Gang auszuwählen. Ein Drehmoment des Antriebsmotors wird dabei insbesondere vor dem Umschalten gemessen, um festzustellen, ob das Fahrzeug sich in an einem Anstieg oder an einem Gefälle bewegt und um die Art des Untergrundes festzustellen, beispielsweise ob das Kraftfahrzeug in weichem Sand oder dergleichen bewegt wird.

Weiterhin ist aus der US 2013/0006485 A1 ein Verfahren zur Steuerung eines zweistufigen Untersetzungsgetriebe eines Kraftfahrzeuges bekannt, wobei beim vom Fahrer ausgelösten Umschalten die Steigung der Fahrbahn ermittelt wird und das Umschalten verboten wird, wenn die Steigung einen bestimmten maximalen Wert übersteigt. Somit sollte verhindert werden, dass das Fahrzeug auf einem Gefälle während des Umschaltens von hohen Fahrstufen in die niedrigere Fahrstufe durch sein Gewicht so stark beschleunigt, dass die Synchondrehzahl der Eingangswelle des Getriebes nach dem Umschalten die maximale Motordrehzahl übersteigt. In diesem Fall könnten die Motordrehzahl an die Synchrondrehzahl nicht angehoben werden können, das Umschalten müsste abgebrochen werden und das Untersetzungsgetriebe wird im Neutral verbleiben. Dies hätte ein unkontrolliertes Beschleunigen des Fahrzeugs bergab zur Folge.

Aus der gattungsbildenden US 2012/0029781 A1 ist ein Verfahren zur Steuerung und/oder Regelung eines zweistufigen Untersetzungsgetriebe eines Kraftfahrzeuges bekannt. Das Kraftfahrzeug weist einen Antriebsmotor sowie ein Hauptgetriebe in Form eines Automatikgetriebes auf. Dem Automatikgetriebe ist das Untersetzungsgetriebe nachgeordnet. Das Untersetzungsgetriebe weist eine hohe Fahrstufe und eine niedrige Fahrstufe auf. Die hohe Fahrstufe kann für Fahrten unter normalen Bedingungen genutzt werden. Die niedrige Fahrstufe kann für spezielle Fahrbedingungen genutzt werden, wie Geländefahrten, das Ziehen eines Anhängers an Steigungen bei geringer Geschwindigkeit und dergleichen. Die Auswahl der hohen Fahrstufe oder der niedrigen Fahrstufe kann automatisch durch eine Steuervorrichtung vorgenommen werden. Es wird eine Steigung, eine Fahrzeuggeschwindigkeit und ein Bremsdruck ermittelt. Eine automatische Umschaltung von der hohen in die niedrige Fahrstufe erfolgt, wenn das Fahrzeug nicht im Stillstand ist und die Fahrzeuggeschwindigkeit kleiner ist als eine Geschwindigkeitsschwelle. Wenn die Geschwindigkeit des Fahrzeuges zu groß ist, erfolgt keine Umschaltung in die niedrige Fahrstufe. In einem weiteren Schritt wird mittels eines Sensors die Fahrpedalstellung gemessen und mit einer minimalen Pedalstellung, d.h. einem Mindestschwellwert, verglichen. Eine Umschaltung erfolgt nur, wenn die Fahrpedalstellung größer als der Mindestschwellwert ist. Wenn das Fahrpedal nicht genügend betätigt ist, erfolgt keine Umschaltung in die niedrige Fahrstufe. In einem weiteren Schritt wird mittels eines Sensors die Fahrzeugbeschleunigung gemessen. Wenn die Fahrzeugbeschleunigung kleiner als ein Grenzwert ist, obwohl das Fahrpedalstellung ein hohes Drehmoment des Antriebmotors anweist, wird eine Umschaltung in die niedrige Fahrstufe bevorzugt. Das heißt eine Umschaltung in die niedrige Fahrstufe erfolgt nur, wenn die Fahrzeugbeschleunigung gering ist, das Fahrzeug schlecht beschleunigt und das Fahrpedal genügend betätigt ist. Die Steigung der Straße beziehungsweise des Untergrundes wird mittels eines Sensors gemessen, um zu bestimmen, ob ein Zurückrollen wahrscheinlich ist oder nicht. Wenn die gemessene Steigung größer ist als ein bestimmter Steigungsgrenzwert, wird gemessen, ob die Bremsen aktiviert sind. Um ein Zurückrollen des Kraftfahrzeuges beim Umschalten zu verhindern, wird das Antriebsmoment des Antriebsmotors reduziert und es wird die Bremse automatisch betätigt. Das Fahrzeug hält daher an, bevor in die niedrige Fahrstufe umgeschaltet wird. Hiernach wird von der hohen Fahrstufe in die niedrige Fahrstufe umgeschaltet und dann wird anschließend das Antriebsmoment erhöht, nachdem die Bremse wieder gelöst worden ist. Wenn zu Beginn des Verfahrens das Kraftfahrzeug steht und die Bremsen betätigt sind, dann wird keine automatische Umschaltung vorgenommen, da laut dem Verfahren ein Zurückrollen unwahrscheinlich sein soll.

Dieses gattungsbildende Verfahren ist noch nicht optimal ausgebildet. Das Anfahren oder Fahren am Berg oder an einer sonstigen Steigung kann die Anfahrelemente wie Kupplung, Synchronisiereinrichtung oder dergleichen belasten. Beim Anfahren entsteht insbesondere Wärme, die die Anfahrelemente belasten könnten. Es besteht die Gefahr, dass wenn ein Anhänger angehängt ist, und der Bremsdruck nicht ausreicht, das Fahrzeug an einem Steilgefälle unbeabsichtigt anfängt zu rollen.

Der Erfindung liegt daher die Aufgabe zugrunde, die Belastung von Anfahrelementen zu minimieren und insbesondere ein unbeabsichtigtes Rollen des Kraftfahrzeuges zu vermeiden.

Diese erfindungsgemäße Aufgabe wird nun zunächst durch ein Verfahren mit den Merkmalen des Patentanspruches 1 gelöst. Eine manuelle Umschaltung des Fahrzeuges erfolgt, wenn der Fahrer ein entsprechendes Schaltelement betätigt hat und ein ermittelter Wert größer als ein von der Steigung des Fahruntergrundes abhängiger Mindestwert ist, wobei der ermittelte Wert ein Bremsdruck und/oder die Fahrzeuggeschwindigkeit ist. Wenn die Fahrzeuggeschwindigkeit nicht größer als null ist (im Stillstand), wird als der Wert ein Bremsdruck gewählt. Der Bremsdruck wird ermittelt und die Umschaltung erfolgt wenn der Bremsdruck größer als eine Mindestbremsdruckkennlinie ist, wobei die Mindestbremsdruckkennlinie von der Steigung des Fahruntergrundes abhängt. Der Stillstand des Kraftfahrzeuges wird vorzugsweise über mindestens einen Raddrehzahlsensor erkannt. Zur Umschaltung betätigt der Fahrer eine Bremse und das entsprechende Schaltelement. Jeder Umschaltvorgang im Stillstand wird durch eine sogenannte Berganfahrhilfe unterstützt. Dabei erkennt ein Steuergerät, insbesondere ein Bremsensteuergerät den Umschaltwunsch des Fahrers. Vorzugsweise wird nun abgefragt, ob ein Anhänger angehängt ist. Bei der Ermittlung des Bremsdrucks wird unterschieden, ob ein Anhänger angehängt ist, oder ob kein Anhänger angehängt ist. Für den Fall, dass ein Anhänger angehängt ist, wird ein höherer Mindestbremsdruck verwendet, als für den Fall, in dem kein Anhänger angehängt ist. Ob ein Anhänger angehängt ist, kann insbesondere dadurch erkannt werden, dass an dem Kraftfahrzeug ein Anhängersteckdose vorhanden ist, wobei ermittelt wird, ob ein Verbraucher an der Anhängersteckdose angeschlossen ist, oder nicht. Insbesondere werden unterschiedliche Mindestbremsdruckkennlinien für die Fälle mit oder ohne Anhänger für jede Fahrstufe am Wählhebel des Automatikgetriebes verwendet. Über einen Längsbeschleunigungssensor erkennt das Bremsensteuergerät mit guter Genauigkeit die Steigung, und ob das Kraftfahrzeug in Fahrtrichtung an einem Anstieg oder an einem Gefälle steht. Abhängig von der eingelegten Fahrstufe am Wählhebel des Automatikgetriebes und dem eingelesenen Wert des Längsbeschleunigungssensors erwartet das Bremsensteuergerät nun einen Mindestbremsdruck, den der Fahrer über das Bremspedal erzeugt haben muss. Dieser Mindestbremsdruck ist notwendig, so dass das Fahrzeug, insbesondere während des Umschaltvorganges von der hohen Fahrstufe in die niedrige Fahrstufe nicht zu rollen beginnt und aufgrund der größeren Drehmomente in der niedrigen Fahrstufe nicht anfährt. Das Verfahren kann jedoch auch bei manuellen Umschaltungen von der niedrigen in die höhere Fahrstufe angewendet werden. Bei jedem Umschaltvorgang werden insbesondere drei Schaltstellungen des Untersetzungsgetriebes, nämlich die hohe Fahrstufe, eine Neutralstellung und die niedrige Fahrstufe durchlaufen. Es kommt dabei in den Fahrstufen des Automatikgetriebes "Rückwärtsgang", "Drive", "D/S" und "Tipptronic" zu unterschiedlichen Antriebsmomenten an den Rädern, die wiederum unterschiedliche Mindestbremsdrücke erfordern. Ist der Mindestbremsdruck für alle drei Schaltstellungen erreicht, sendet das Bremsensteuergerät eine Schaltfreigabe, insbesondere über ein CAN-Bus an ein Allrad-Steuergerät. Das Bremsensteuergerät hält den Bremsdruck für eine vorbestimmte Zeitspanne, vorzugsweise für ca. 1,2 Sekunden, aufrecht, insbesondere konstant, wenn der Umschaltwunsch von der hohen Fahrstufe in die niedrige Fahrstufe oder der Umschaltwunsch von der niedrigen Fahrstufe in die hohe Fahrstufe gesendet worden ist. Diese Zeitspanne beziehungsweise Haltezeit reicht für eine Umschaltung zwischen der hohen Fahrstufe und der niedrigen Fahrstufe beziehungsweise zwischen der niedrigen Fahrstufe und der hohen Fahrstufe aus, um das Fahrzeug im Stillstand zu halten, auch wenn der Fahrer zu Beginn des Umschaltvorganges das Bremspedal nicht mehr betätigt. Die Haltezeit beziehungsweise diese Zeitspanne verlängert sich um die gleiche Zeit, die der Fahrer länger das Bremspedal betätigt. Nach erfolgter Schaltfreigabe wird nun ein Wandler im Automatikgetriebe zum Öffnen aufgefordert. Nachdem dem Allrad-Steuergerät signalisiert worden ist, dass der Wandler geöffnet ist, wird die Umschaltung zwischen der hohen Fahrstufe in die niedrige Fahrstufe (bzw. von der niedrigen in die hohe Fahrstufe) durchgeführt. Hiernach wird der Wandler im Automatikgetriebe wieder geschlossen. Im Stillstand kann in den Fahrstufen Rückwärtsgang, Neutral, Drive und Tipptronic zwischen der hohen Fahrstufe und der niedrigen Fahrstufe im Untersetzungsgetriebe umgeschaltet werden. Eine Umschaltung in der Fahrstufe "Parken" wird insbesondere unterdrückt, um Synchronisationsprobleme im Verteilergetriebe zu vermeiden. Der Mindestdruck bei Steigungen im Stillstand kann beispielsweise derart gewählt werden, so dass, wenn das Fahrzeug in Fahrstellung "Drive" im Automatikgetriebe und in der niedrigen Fahrstufe des Untersetzungsgetriebe am Berg steht und die hohe Fahrstufe vorgewählt wird, das Fahrzeug zurückrollt, wenn der Bremsdruck 1,0 bar oder weniger beträgt. Wenn in der Ebene D im Automatikgetriebe die Fahrstufe "Drive" eingelegt ist und von der hohen Fahrstufe in die niedrige Fahrstufe geschaltet wird, dann reichen zwar in der hohen Fahrstufe 10,0 bar, damit das Fahrzeug nicht losrollt, in der niedrigen Fahrstufe sind jedoch mindestens 20,0 bar erforderlich, so dass das Fahrzeug nicht losrollt. Ferner beginnt das Fahrzeug zu rollen, wenn die Fahrstufe "D" im Automatikgetriebe gewählt ist und der Fahrer von der hohen Fahrstufe in die niedrige Fahrstufe schaltet, wobei der Motor (bei Start-/Stopp -Fahrzeugen) gestartet wird und der Bremsdruck nur ca. 1,0 bar beträgt. Wenn das Fahrzeug in der Ebene steht und die Fahrstufe "N" im Automatikgetriebe gewählt ist, bräuchte die Bremse nicht betätigt zu werden. Vorzugsweise wird dennoch abgefragt, ob die Bremse betätigt wird; dies dient zur Anwesenheitserkennung des Fahrers.

. Es kann eine Umschaltung durch manuelle Betätigung des Schaltelementes durch den Fahrer erfolgen, wenn die Fahrzeuggeschwindigkeit größer als null ist - während der Fahrt in der Ebene, an einer Steigung oder im Gefälle. In diesem Fall wird als der Wert die Geschwindigkeit des Fahrzeugs gewählt. Dass das Fahrzeug nicht im Stillstand ist und die Geschwindigkeit V > 0 km/h ist, wird vorzugsweise über die Raddrehzahlsensoren erkannt. Zur Umschaltung zwischen der hohen Fahrstufe und der niedrigen Fahrstufe braucht der Fahrer lediglich das entsprechende Schaltelement, insbesondere den Taster zu betätigen. Das Allradsteuergerät prüft dann die Wählhebelstellung, die maximal zulässige Geschwindigkeit und die von der Steigung abhängige erforderliche Mindestgeschwindigkeit. Vorzugsweise ist eine steigungsabhängige Mindestgeschwindigkeit erforderlich und vorgesehen, damit das Kraftfahrzeug während der Umschaltung und der damit verbundenen Zugkraftunterbrechung nicht zum Stillstand kommt oder sogar zurückrollt. Diese Mindestgeschwindigkeit ist nicht nennenswert vom Beladungszustand oder von dem Vorhandenseins eines Anhängers abhängig. Es wurde festgestellt, dass ein höheres Gesamtgewicht durch Nutzung eines Anhängers an Steigungen durch die größere Massenträgheit kompensiert wird. Die Ermittlung der Steigung während der Fahrt wird insbesondere in drei Schritten durchgeführt. Zuerst wird die Fahrzeuggeschwindigkeit differenziert und gefiltert, dann wird das Ergebnis vom Längsbeschleunigungssignal subtrahiert, um die reale Fahrzeugbeschleunigung zu eliminieren. Als letztes beziehungsweise drittes wird die negative Steigung des erhaltenen Signals mit 1 m/s³ limitiert und auf einen Grenzwert von vorzugsweise 4 m/s² gedeckelt. Die Limitierung ist vorzugsweise derart gewählt, das heißt nicht flacher und nicht steiler gewählt, um ansonsten die ermittelte Steigung bei Überfahren einer Bodenwelle zu langsam herunterläuft beziehungsweise die Steigung nicht ausreichend hochgehalten werden kann. Die Deckelung ist erforderlich, weil sonst nach Überfahren eines Hindernisses mit hoher Aufbaubeschleunigung der Signalwert des Längsbeschleunigungssensors zu hoch ansetzt und zu lange benötigt, um wieder herunter zulaufen. Durch diese Limitierung werden kritische Situationen durch zu gering erkannte Steigungen zum Beispiel durch Nickbewegungen des Kraftfahrzeuges in Folge von Lastwechseln oder Bodenunebenheiten verhindert und gefährliche Fahrmanöver durch Zurückrollen oder Zurückrutschen in Folge einer Zugkraftunterbrechung bei Umschaltungen unterbunden. Zur Steigerung der Robustheit des Verfahrens kann bei einem sehr langsamen Überfahren einer Kuppe der Fahrerwunsch durch eine flachere Limitierung später umgesetzt werden, damit die Hinterräder sich vollständig in der Ebene befinden und ein ungewolltes Zurückrollen verhindert wird. Die Umschaltung erfolgt vorzugsweise in Fahrstufen "Neutral", "Drive" und "Tipptronic" im Automatikgetriebe. Eine manuelle Umschaltung im Rückwärtsgang wird vorzugsweise nicht unterstützt, da der Gangsprung zwischen der hohen Gangstufe und der niedrigen Fahrstufe ca. 2,7 zu 1 betragen kann und die Gefahr dabei bestehen könnte, dass bei einer Rückschaltung von der hohen Fahrstufe in die niedrige Fahrstufe der Umschaltvorgang nicht ausreichend synchronisiert werden könnte. Die maximal zulässige Fahrzeuggeschwindigkeit für Umschaltung von der hohen Fahrstufe in die niedrige Fahrstufe beträgt vorzugsweise in etwa 50 km/h. Dies hängt von der Übersetzung des Antriebsstranges und dem erlaubten Drehzahlbereich des Antriebsmotors ab. Für Umschaltvorgänge von der niedrigen Fahrstufe in die hohe Fahrstufe hat der Fahrer insbesondere die Möglichkeit bis ca. 60 km/h umzuschalten. Sind alle drei Schaltbedingungen erfüllt, wird wiederum der Wandler im Automatikgetriebe geöffnet und nach dem Öffnen des Wandlers wird die Umschaltung vorgenommen. Umschaltungen im Gefälle werden insbesondere durch eine Bergabfahrhilfe im Bremsensteuergerät unterstützt. Während der Zugkraftunterbrechung wird das Fahrzeug auf konstanter Geschwindigkeit gehalten, wodurch die Umschaltung für den Fahrer kaum spürbar abläuft. Im Gefälle werden die Fahrstufen "Neutral", "Drive" und "Tipptronic" des Automatikgetriebes unterstützt.

Eine manuelle Umschaltung in dem Untersetzungsgetriebe erfolgt während der Fahrt des Kraftfahrzeuges, wenn ein Motormoment kleiner als ein Schwellwert ist. Hierbei wird vorzugsweise zunächst abgefragt, ob ein Anhänger angehängt ist, wobei ein Schwellwert für das Motormoment ohne Anhänger und ein weiterer Schwellwert für das Motormoment mit Anhänger verwendet werden. Der Schwellwert mit Anhänger ist insbesondere größer als der Schwellwert ohne Anhänger. Die dem Motormoment zugeordneten Schwellwerte hängen vorzugsweise von der Fahrzeugbeschleunigung und der Steigung ab. Wenn das Motormoment größer als der entsprechende Schwellwert und damit zu hoch ist, beispielsweise weil das Kraftfahrzeug einem erhöhten Fahrwiderstand bei geringer Geschwindigkeit im tiefen Sand ausgesetzt ist, wird keine Umschaltung vorgenommen, da die Gefahr bestehen könnte, dass durch die Zugkraftunterbrechung das Fahrzeug stark verlangsamt oder anhält. Die eingangs genannten Nachteile sind daher vermieden und entsprechende Vorteile erzielt.

Es gibt nun unterschiedliche Möglichkeiten, das erfindungsgemäße Verfahren auszugestalten und weiterzubilden. Hierfür darf zunächst auf die dem Patentanspruch 1 nachgeordneten Patentansprüche verwiesen werden. Im Folgenden wird eine bevorzugte Ausgestaltung der Erfindung anhand der Zeichnung und der dazugehörigen Beschreibung näher erläutert.

In der Zeichnung zeigt:
- Fig. 1: in einem schematischen Ablaufdiagramm das erfindungsgemäße Verfahren zur Steuerung und/oder Regelung eines zweistufigen Untersetzungsgetriebes,
- Fig. 2: in einem schematischen Diagramm mehrere Mindestbremsdruckkennlinien, aufgetragen über die Längsbeschleunigung in m/s² für ein Kraftfahrzeug ohne Anhänger, wobei unterschiedliche Mindestbremsdruckkennlinien für die Schaltstellung "Rückwärtsgang", "Normal" und "Drive" in einem Automatikgetriebe dargestellt sind,
- Fig. 3: in einem schematischen Diagramm eine weitere Mindestbremsdruckkennlinie, aufgetragen über die Längsbeschleunigung in m/s² für ein Kraftfahrzeug mit Anhänger, wobei unterschiedliche Mindestbremsdruckkennlinien für die Schaltstellung "Rückwärtsgang", "Normal" und "Drive" im Automatikgetriebe dargestellt sind,
- Fig. 4: in einem schematischen Diagramm eine Mindestgeschwindigkeit in km/h, aufgetragen über eine Längsbeschleunigung in m/s²,
- Fig. 5: in einem schematischen Diagramm eine Limitierungsfunktion einer ermittelten Steigung aufgetragen über die Fahrzeuggeschwindigkeit, und

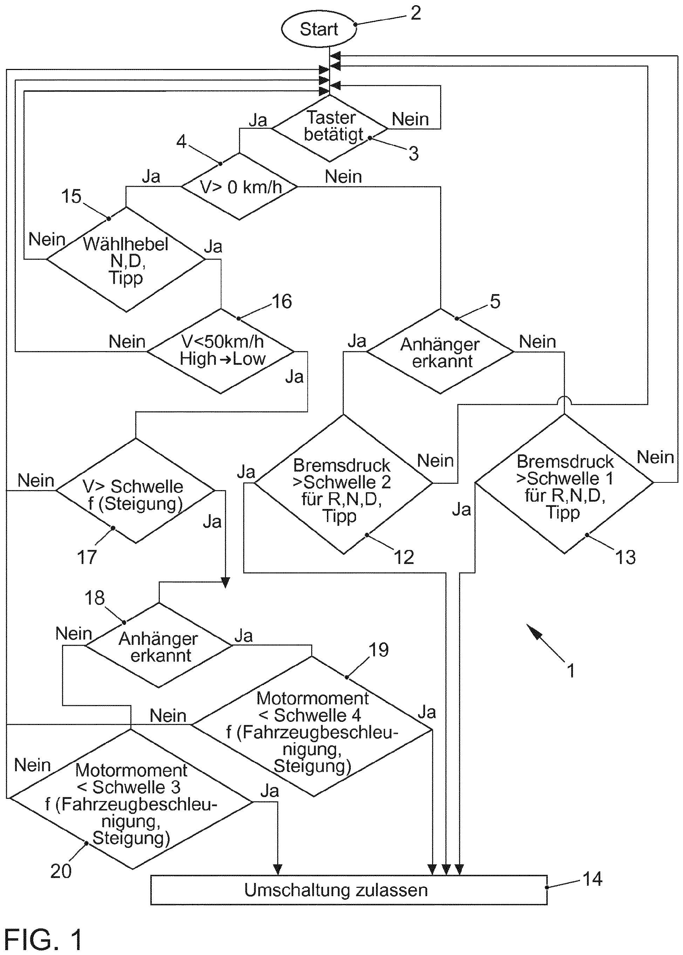

In Fig. 1 ist ein Verfahren zur Steuerung und/oder Regelung eines zweistufigen Untersetzungsgetriebes (nicht näher dargestellt) eines ebenfalls nicht dargestellten Kraftfahrzeuges hier stark schematisch dargestellt. Das Kraftfahrzeug weist einen Antriebsstrang mit einem Antriebsmotor, mit einem Hauptgetriebe und mit einem nachgeordneten Untersetzungsgetriebe auf. Es ist ferner mindestens ein Steuergerät, hier insbesondere ein Bremsensteuergerät und ein Allradsteuergerät zur Ausführung des Verfahrens vorgesehen.

Das dargestellte Verfahren eignet sich insbesondere für Kraftfahrzeuge mit einem Hauptgetriebe in Form eines Automatikgetriebes, wobei das Automatikgetriebe dem Untersetzungsgetriebe vorgeschaltet ist. Es ist jedoch auch denkbar, das Verfahren in Kraftfahrzeugen einzusetzen, die mit einem Hauptgetriebe in Form eines Handschaltgetriebes ausgestattet sind.

Das Untersetzungsgetriebe weist zwei Fahrstufen auf, nämlich eine hohe Fahrstufe und eine niedrige Fahrstufe. Die hohe Fahrstufe kann auch als Straßengang bezeichnet werden. Das Kraftfahrzeug ist insbesondere als Geländefahrzeug ausgebildet. Die niedrige Fahrstufe weist eine stärkere Untersetzung als die hohe Fahrstufe auf und eignet sich so insbesondere als Geländegang. Das Untersetzungsgetriebe ist insbesondere elektronisch gesteuert. In Fig. 1 ist nun dargestellt, wie eine manuelle Umschaltung durch den Fahrer erfolgt, das heißt welche Bedingungen erfüllt sein sollten, damit eine Umschaltung von der hohen Fahrstufe in die niedrige Fahrstufe oder eine Umschaltung von der niedrigen Fahrstufe in die hohe Fahrstufe erfolgt.

Nach einem Start 2 wird in einer ersten Abfrage 3 abgefragt, ob ein Schaltelement, insbesondere ein Taster betätigt ist oder nicht. Mittels des Schaltelementes zeigt der Fahrer den Umschaltwunsch von der hohen Fahrstufe und die niedrige Fahrstufe (bzw. von der niedrigen in die hohe Fahrstufe) an. Ist der Taster nicht betätigt, beginnt das Verfahren wieder bei dem Schritt "Start 2". Ist der Taster betätigt worden, erfolgt eine weitere Abfrage 4, ob die Geschwindigkeit größer als 0 km/h ist. An dieser Stelle wird im Verfahren 1 unterschieden, ob das Kraftfahrzeug sich im Stillstand befindet oder eine Umschaltung während der Fahrt erfolgen soll.

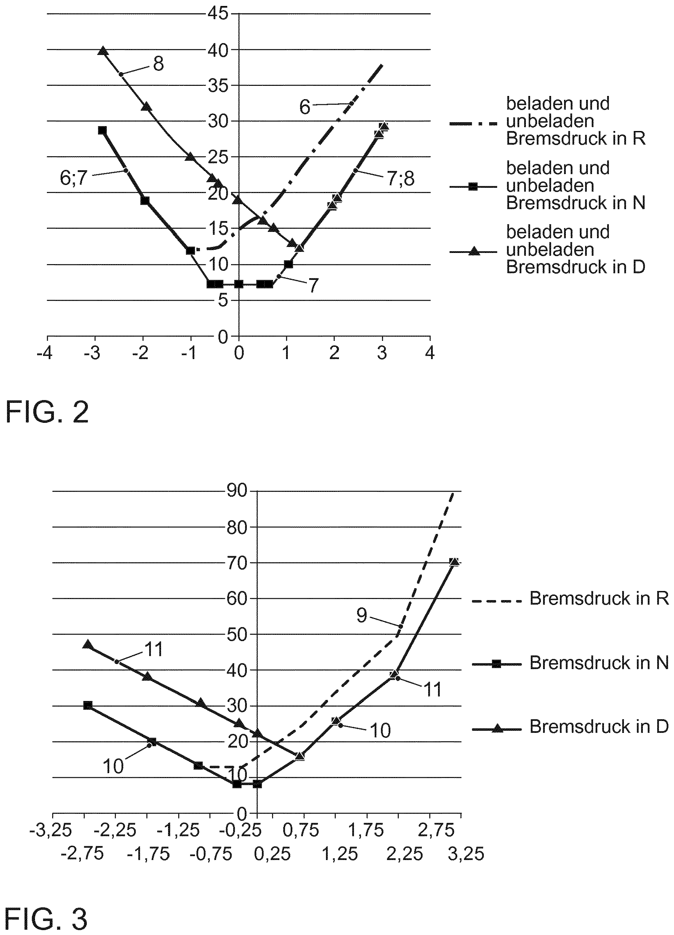

Es darf nun zunächst auf den Fall eingegangen werden, dass eine Umschaltung im Stillstand in der Ebene, an einer Steigung oder im Gefälle erfolgen soll. Der Fahrzeugstillstand wird insbesondere über Messwerte von mindestens einem Raddrehzahlsensor erkannt. Wenn eine Umschaltung erfolgen soll, muss der Fahrer eine Bremse betätigen. Jeder Umschaltvorgang im Stillstand wird vom Bremsensteuergerät durch eine Berganfahrhilfe unterstützt. Es erfolgt nun eine Abfrage 5, ob ein Anhänger erkannt wird. Das Kraftfahrzeug weist eine Anhängersteckdose auf, wobei abgefragt wird, ob ein Verbraucher in die Anhängersteckdose eingesteckt ist oder nicht. Das Bremsensteuergerät unterscheidet nun zwischen mehreren Mindestbremsdruckkennlinien 6 bis 11, die in den Fig. 2 und 3 dargestellt sind.

Die eingangs genannten Nachteile sind nun dadurch vermieden, dass eine manuelle Umschaltung im Stillstand des Kraftfahrzeuges erfolgt, wenn das Schaltelement betätigt wird und der Bremsdruck größer als eine Mindestbremsdruckkennlinie 6, 7, 8, 9, 10, 11 ist, wobei die Mindestbremsdruckkennlinie 6, 7, 8, 9, 10, 11 von der Steigung des Fahruntergrundes abhängt. Die jeweilige Mindestbremsdruckkennlinie 6 bis 11 repräsentiert für jeweilige Zustände eines Wählhebel, nämlich in Abhängigkeit davon, ob sich dieser in der Position "R", in der Position "N" oder in der Position "D" befindet, die jeweiligen Mindestbremsdrücke (jeweiligen Werte für Mindestbremsdrücke) in Abhängigkeit einer jeweiligen Steigung. Anders ausgedrückt, eine manuelle Umschaltung im Stillstand des Kraftfahrzeuges erfolgt dann, wenn das Schaltelement betätigt wird und der Bremsdruck größer ist als ein Mindestbremsdruck, wobei dessen jeweiliger Wert durch einen Punkt/Ort auf einer jeweiligen Mindestbremsdruckkennlinie 6 bis 11 repräsentiert wird, wobei die jeweilige Mindestbremsdruckkennlinie 6 bis 11 in Abhängigkeit der Steigung des Fahruntergrundes spezifisch verläuft (und für den Mindestbremsdruck auch in Abhängigkeit der entsprechenden Steigung des Fahruntergrundes spezifische Werte repräsentiert). Dies ist insbesondere vorteilhaft für Umschaltvorgänge von der hohen Fahrstufe in die niedrige Fahrstufe, da in der niedrigen Fahrstufe höhere Antriebsmomente zur Verfügung stehen und ein unbeabsichtigtes Losrollen des Kraftfahrzeuges zu vermeiden ist.

In einem in Fig. 1 nicht dargestellten Verfahrensschritt wird nun die Steigung mit einem Sensor gemessen. Die Steigung wird insbesondere mit einem Längsbeschleunigungssensor gemessen. Mittels des Längsbeschleunigungssensors erkennt das Bremsensteuergerät mit guter Genauigkeit, nämlich insbesondere, ob das Kraftfahrzeug an einem Anstieg steht oder an einem Gefälle steht, in Fahrtrichtung betrachtet. Wenn das Fahrzeug in Fahrtrichtung an einem Gefälle steht, ist dies durch negative Werte des Längsbeschleunigungssensors ausgedrückt, wenn das Fahrzeug an einem Anstieg steht in Fahrtrichtung, dann zeigt der Längsbeschleunigungssensor positive Werte an. Ausgehend von den in Fig. 2 und 3 dargestellten Mindestbremsdruckkennlinien 6 bis 11 erwartet das Bremsensteuergerät einen entsprechenden Mindestbremsdruck, den der Fahrer über das Bremspedal erzeugt haben muss. Die Mindestbremsdruckkennlinie 6 zeigt den Mindestbremsdruck in Abhängigkeit der Längsbeschleunigung im beladenen oder unbeladenen Zustand des Kraftfahrzeuges an, wobei kein Anhänger angehängt ist und der Rückwärtsgang im Automatikgetriebe eingelegt ist. Die Mindestbremsdruckkennlinie 7 zeigt den Mindestbremsdruck in Abhängigkeit von der Längsbeschleunigung an, wobei kein Anhänger angehängt ist und eine Neutralstellung durch das Automatikgetriebe gewählt worden ist. Die Mindestbremsdruckkennlinie 8 zeigt den Mindestbremsdruck in Abhängigkeit von der Längsbeschleunigung an, wobei kein Anhänger angehängt ist und eine Fahrstellung "Drive" im Automatikgetriebe eingelegt ist. Es sind dabei entsprechende, größere Mindestbremsdruckkennlinien 9, 10, 11 erforderlich, wenn ein Anhänger angehängt ist (vgl. Fig. 3). Die Mindestbremsdruckkennlinien 9, 10, 11 bilden die entsprechenden Fälle für ein Kraftfahrzeug mit Anhänger ab, wobei im Automatikgetriebe entsprechend die Fahrstufen Rückwärtsgang, Neutralstellung und "Drive" eingelegt sind.

Steht das Fahrzeug an einem Gefälle, das heißt ist der Längsbeschleunigungssensorwert negativ, ist der höchste Mindestbremsdruckwert erforderlich, wenn im Automatikgetriebe die Fahrstellung "Drive" eingelegt worden ist, um ein unbeabsichtigtes Losfahren des Fahrzeuges zu vermeiden. Steht das Fahrzeug an einem Anstieg und ist im Automatikgetriebe der Rückwärtsgang eingelegt, so ist ein höherer Mindestbremsdruck erforderlich, wenn im Automatikgetriebe die Rückwärtsfahrstufe eingelegt worden ist.

Die Mindestbremsdruckkennlinien 9 bis 11 mit Anhänger erfordern größere Mindestbremsdrücke (in Fig. 1 dann > "Schwelle 2") als die Mindestbremsdruckkennlinie ohne Anhänger 6, 7, 8 (in Fig. 1 dann > "Schwelle 1 "). Es ist denkbar, dass die Mindestbremsdruckkennlinien 6, 7, 8 und die Mindestbremsdruckkennlinie 9, 10, 11 sich lediglich durch einen konstanten Wert unterscheiden. In bevorzugter Ausgestaltung sind die Mindestbremsdruckkennlinien 6, 7, 8 und 9, 10, 11 jedoch nicht lediglich durch einen konstanten Wert voneinander verschieden, sondern sind individuell an die entsprechenden Erfordernisse des Betriebs mit oder ohne Anhänger angepasst. Diese Mindestbremsdruckkennlinien 6 bis 11 können aus entsprechenden Versuchen gewonnen werden.

In den Abfragen 12, 13 (vgl. Fig. 1) wird nun die in Abhängigkeit von dem Vorhandensein des Anhängers ermittelte Mindestbremsdruckkennlinie 6, 7, 8 bzw. 9, 10, 11 mit dem aktuell anliegenden Bremsdruck verglichen. Diese jeweilige Mindestbremsdruckkennlinie 6, 7, 8 bzw. 9, 10, 11 ist notwendig, damit das Kraftfahrzeug während des Umschaltvorganges von der hohen Fahrstufe in die niedrige Fahrstufe nicht zu rollen beginnt und aufgrund des höheren Radmomentes in der niedrigen Fahrstufe nicht anfährt. Entsprechendes gilt bei einer Umschaltung von der niedrigen in die hohe Fahrstufe. Das Untersetzungsgetriebe weist zwischen der hohen Fahrstufe und der niedrigen Fahrstufe eine Neutralstellung auf. Bei jedem Umschaltvorgang des Untersetzungsgetriebes werden die drei Schaltstellungen hohe Fahrstufe, Neutralstellung und niedrige Fahrstufe durchlaufen und es kommt dabei in den Fahrstufen des Automatikgetriebes "Rückwärtsgang", "Drive" und "Tipptronic" zu unterschiedlichen Antriebsmomenten an den Rädern, die wiederum unterschiedliche Bremsdrücke in der Bremsanlage erfordern. Ist der Mindestbremsdruck für alle drei Schaltstellungen erreicht, so erhält das Allrad-Steuergerät eine Schaltfreigabe (nicht dargestellt) über einen CAN-Bus von dem Bremsensteuergerät.

Wenn im Stillstand der ermittelte Bremsdruck kleiner ist als der erforderliche Mindestbremsdruck, gibt es unterschiedliche Optionen das Verfahren fortzuführen. Wenn der Bremsdruck für den Fahrzeugstillstand nicht ausreicht, kann zum einen das Verfahren abgebrochen werden. Zum anderen kann dem Fahrer durch eine Kontrollleuchte signalisiert werden, dass der Bremsdruck nicht ausreichend ist. Diese Kontrollleuchte kann beispielsweise für den Fahrer bereits im Zusammenhang mit den Schaltvorgängen des Automatikgetriebes verwendet werden. Es ist denkbar, dass in dem vorliegenden Fall die Leuchte aber in einer anderen Farbe leuchtet, beispielsweise blau oder grün. Wenn der Fahrer nun für eine Zeitspanne, in der die Kontrollleuchte leuchtet, nichts unternimmt, kann in einem weiteren Verfahrensschritt die Kontrollleuchte wieder gelöscht werden und das Verfahren wieder mit Start 2 fortgeführt werden.

Es gibt ferner die Möglichkeit, dass der Bremsdruck automatisch durch ein entsprechendes Bremsensteuergerät erhöht wird bis der Mindestbremsdruck erreicht ist ohne weiteres Zutun des Fahrers.

In besonders bevorzugter Ausgestaltung hält das Bremsensteuergerät den Bremsdruck im Rahmen einer Berganfahrhilfe für einen bestimmten Zeitraum, vorzugsweise in etwa für 1,2 Sekunden aufrecht, insbesondere konstant. Dieser Zeitraum reicht für eine Umschaltung zwischen der hohen Fahrstufe und der niedrigen Fahrstufe aus, um das Fahrzeug im Stillstand zu halten, auch wenn der Fahrer zu Beginn des Umschaltvorganges vom Bremspedal geht. Der Zeitraum verlängert sich um die gleiche Zeit, die der Fahrer das Bremspedal betätigt. Nach erfolgter Schaltfreigabe wird durch ein entsprechendes Vorwarnsignal vom Allradsteuergerät ein Wandler im Automatikgetriebe zum Öffnen aufgefordert. In dem Verfahrensschritt 14 wird die Umschaltung zugelassen beziehungsweise ausgeführt. Nach erfolgter Umschaltung werden die entsprechenden Signale zurückgenommen und der Wandler im Automatikgetriebe wird wieder geschlossen. Im Stillstand kann in den Fahrstufen "Rückwärtsgang", "Neutral", "Drive" und "Tipptronic" des Automatikgetriebes zwischen der hohen Fahrstufe und der niedrigen Fahrstufe des Untersetzungsgetriebes umgeschaltet werden. Eine Umschaltung von der Fahrstufe "Parken" des Automatikgetriebes wird insbesondere unterdrückt, um Synchronisationsprobleme im Untersetzungsgetriebe beziehungsweise Verteilergetriebe zu vermeiden.

Der Mindestdruck in der Ebene, das heißt, wenn die Längsbeschleunigung gleich 0 ist, beträgt für die Fahrstufe "D" beispielsweise ca. mindestens 20,0 bar. Wenn die Fahrstufe "Neutral" im Automatikgetriebe eingelegt ist, bräuchte die Bremse gar nicht betätigt zu werden. Das trotzdem eine Mindestbremsdruckkennlinie angegeben ist, dient zur Anwesenheitserkennung des Fahrers.

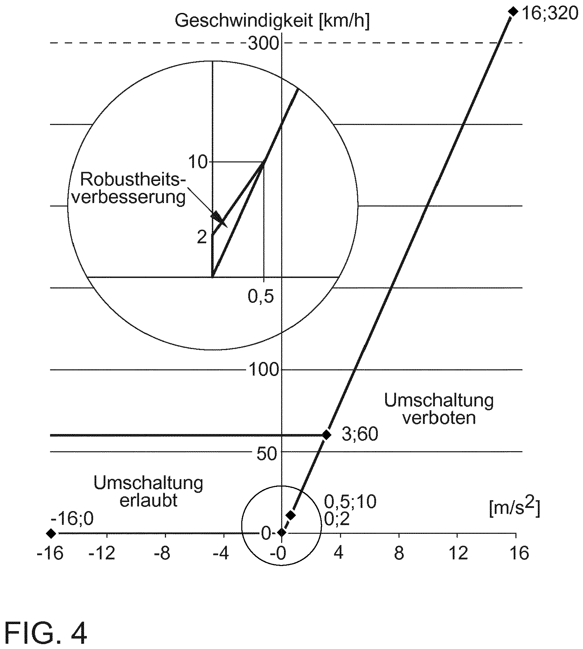

In Fig. 4 darf nun der Fall ausgehend von der Abfrage 4 erläutert werden, dass eine Umschaltung während der Fahrt in der Ebene, an einer Steigung und/oder im Gefälle durch eine manuelle Anwahl des Fahrers erfolgt. Während der Fahrt bedeutet, dass die Geschwindigkeit größer als 0 km/h ist. Der Bewegungszustand des Fahrzeugs, nämlich V > 0 km/h, wird über die Raddrehzahlsensoren erkannt. Zur Umschaltung zwischen der hohen Fahrstufe und der niedrigen Fahrstufe oder zwischen der niedrigen Fahrstufe und der hohen Fahrstufe braucht der Fahrer lediglich den entsprechenden Taster zu betätigen. Dies wird in der Abfrage 3 abgefragt. Nachdem in der Abfrage 4 erkannt worden ist, dass das Fahrzeug in Bewegung ist, wird die Wählhebelstellung des Automatikgetriebes abgefragt. In der Abfrage 15 wird abgefragt, ob der Wählhebel sich in der Stellung "N", "D" oder "Tipptronic" befindet. Falls dies nicht der Fall ist, beginnt das Verfahren wieder bei Start 2. Falls der Wählhebel sich nun in der Neutralstellung oder in einer Vorwärtsfahrstufe, insbesondere in "D" oder in "Tipptronic" befindet, wird als nächstes in einer Abfrage 16 abgefragt, ob die Geschwindigkeit kleiner als eine maximal zulässige Geschwindigkeit (Grenzgeschwindigkeit) ist. Die maximal zulässige Geschwindigkeit für eine Umschaltung von der hohen Fahrstufe in die niedrige Fahrstufe kann insbesondere 50 km/h betragen.

Bei der Durchführung des Verfahrens 1 wird insbesondere wie bereits beschrieben, die Steigung des Fahruntergrundes mittels eines Längsbeschleunigungssensors gemessen. Bei den Fig. 1 bis 4 ist daher der Mindestbremsdruck bzw. die Mindestgeschwindigkeit über der jeweiligen Steigung in Abhängigkeit der darauf basierenden Längsbeschleunigung dargestellt. Es wird nun die aktuelle Geschwindigkeit mit einer von der Steigung abhängigen, erforderlichen Mindestgeschwindigkeit verglichen (vgl. Fig. 4).

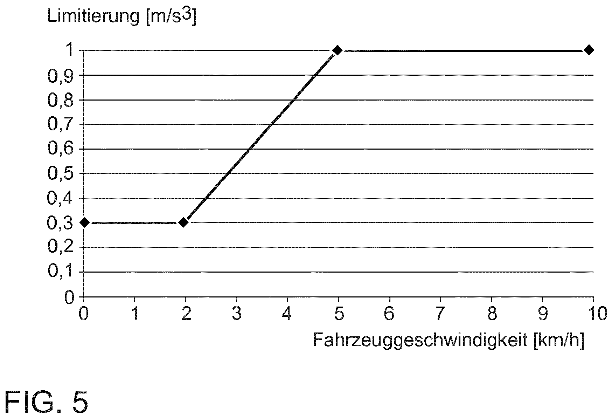

Die Ermittlung der Steigung während der Fahrt wird in drei Schritten durchgeführt. Zuerst wird die Fahrzeuggeschwindigkeit differenziert und gefiltert, das heißt es wird zunächst die Fahrzeugbeschleunigung bestimmt. Diese Fahrzeugbeschleunigung wird danach vom Ergebnis des Längsbeschleunigungssensors subtrahiert, um die reale Fahrzeugbeschleunigung aus dem Signal des Längsbeschleunigungssensors zu eliminieren. In einem letzten Schritt wird die negative Steigung des erhaltenen Signals mit 1 m/s³ limitiert und auf 4 m/s² gedeckelt. Die Limitierung sollte nicht flacher oder steiler ausfallen, weil sonst die ermittelte Steigung bei Überfahren einer Bodenwelle zu langsam herunterlaufen beziehungsweise die Steigung nicht ausreichend hoch gehalten werden könnte. Die Deckelung ist erforderlich, weil sonst nach Überfahren eines Hindernisses mit hoher Aufbaubeschleunigung der Signalwert zu hoch ansetzt und zu lange benötigt, um wieder herunterzulaufen. Das Ergebnis liegt tendenziell zwar zu hoch, damit wird eine etwas zu große Steigung ermittelt, was aber unkritisch ist, und eher zu einem Schaltverbot führt. Somit werden kritische Situationen durch zu gering erkannte Steigungen, zum Beispiel durch Nickbewegungen in Folge von Lastwechseln oder Bodenunebenheiten verhindert und gefährliche Fahrmanöver durch Zurückrollen oder Zurückrutschen in Folge einer Zugkraftunterbrechung bei Umschaltung unterbunden. Es hat sich herausgestellt, dass die Beladung vernachlässigt werden kann, weil dadurch die Steigung eher zu hoch ermittelt wird. Zur Robustheitssteigerung bei einem sehr langsamen Überfahren einer Kuppe wird die Schaltanforderung durch eine flachere Limitierung später umgesetzt, damit die Hinterräder vollständig in der Ebene sind und ein ungewolltes Zurückrollen verhindert. Die Limitierung bei sehr kleinen Geschwindigkeiten ist in Fig. 5 dargestellt.

Während der Abfrage 15 wird selektiert, dass eine Umschaltung nur die Fahrstufen "N" und "D" / "Tipptronic" unterstützt. Der Rückwärtsgang wird insbesondere nicht unterstützt, weil nur ein Rückwärtsgang vorhanden ist und der Gangsprung zwischen der hohen Fahrstufe und der niedrigen Fahrstufe insbesondere 2,7 zu 1 nicht ausreichend synchronisiert werden kann.

Es ist denkbar, wie in Abfrage 16 dargestellt, dass die Grenzgeschwindigkeit für die Umschaltung von der hohen Fahrstufe in die niedrige Fahrstufe etwa 50 km/h beträgt. Bei einer Umschaltung von der niedrigen Fahrstufe in die hohe Fahrstufe hat der Fahrer die Möglichkeit bis vorzugsweise 60 km/h umzuschalten, spätestens beim Erreichen dieser Geschwindigkeit schaltet das Fahrzeug vorzugsweise automatisch um. Die angegebenen Geschwindigkeitsgrenzen haben den Vorteil, dass der Motor des Fahrzeugs auch bei einer Runterschaltung in die niedrige Fahrstufe nicht überdreht.

Die eingangs genannten Nachteile sind dadurch vermieden, dass eine manuelle Umschaltung während der Fahrt des Kraftfahrzeuges erfolgt, wenn das Schaltelement betätigt wird und wenn die Geschwindigkeit des Kraftfahrzeuges größer ist als eine steigungsabhängige Mindestgeschwindigkeit. Wenn nun die Steigung während der Fahrt ermittelt worden ist, wird in der Abfrage 17 die aktuelle Geschwindigkeit mit einer steigungsabhängigen Mindestgeschwindigkeit verglichen. Dies hat den Vorteil, dass das Fahrzeug während der Umschaltung und der damit verbundenen Zugkraftunterbrechung nicht zum Stillstand kommt oder sogar zurückrollt. Diese Mindestgeschwindigkeit ist insbesondere nicht nennenswert vom Beladungszustand oder vom Vorhandensein eines Anhängers abhängig. Es konnte festgestellt werden, dass das höhere Gesamtgewicht des Fahrzeuggespanns durch Nutzung eines Anhängers an Anstiegen durch die höhere Massenträgheit im wesentlichen kompensiert wird.

Die Mindestgeschwindigkeit ist für Fahrten an einem Gefälle im wesentlichen gleich 0 km/h, da dort während einer Zugkraftunterbrechung das Fahrzeug mittels der Erdbeschleunigung weiter beschleunigt und nicht gebremst wird. Bei Fahrten an einem Gefälle in Fahrtrichtung besteht nicht die Gefahr, dass das Kraftfahrzeug anhält oder zurückrollt. Wenn eine Umschaltung im Gefälle erfolgt, kann der Fahrer durch das Bremsensteuergerät unterstützt werden. Während der Zugkraftunterbrechung kann das Fahrzeug auf konstanter Geschwindigkeit gehalten werden, wodurch die Umschaltung für den Fahrer kaum spürbar abläuft. Im Gefälle werden insbesondere die Fahrstufen "N", insbesondere "Tipptronic", und "D/S" unterstützt, bis auf die weiteren oben genannten Maximalgeschwindigkeiten ist es denkbar, dass es keine weiteren Schaltbedingungen gibt. Bei Fahrten an einem Anstieg, d.h. positiven Steigungswerten ist die Mindestgeschwindigkeit größer als 0 km/h. Für positive Steigungswerte ist die Mindestgeschwindigkeit insbesondere eine monoton steigende Funktion. Für positive Steigungswerte steigt die Mindestgeschwindigkeit insbesondere zumindest abschnittsweise linear an. Zur Robustheitsverbesserung des Verfahrens ist die Mindestgeschwindigkeit auch für Fahrten in der Ebene - d.h. der Steigungswert ist im wesentlichen gleich 0- größer als 0 km/h.

In einer Ausgestaltung des Verfahrens 1 ist es nun denkbar, dass eine Umschaltung erfolgt, wenn die drei Abfragen 15, 16, 17 abgefragt und entsprechend bejaht worden sind, das heisst, dass dann der Verfahrensschritt 14 der Umschaltung erfolgt.

In der dargestellten Ausgestaltung des Verfahrens 1 sind noch weitere optionale Abfragen 18, 19, 20 vorgesehen. In der Abfrage 18 wird abgefragt, ob ein Anhänger vorhanden ist. Wenn diese Abfrage bejaht wird, wird das Verfahren mit der Abfrage 19 weitergeführt, nämlich ob das Motormoment kleiner als ein von der Fahrzeugbeschleunigung und der Steigung abhängiger Schwellwert (in Fig. 1 als Schwelle 4 bezeichnet) ist. Wenn das Motormoment kleiner ist als dieser Schwellwert, wird eine Umschaltung in dem Verfahrensschritt 14 vorgenommen. Ist das Motormoment größer als der Schwellwert, wird keine Umschaltung vorgenommen.

Wurde kein Anhänger in der Abfrage 18 erkannt, so wird mit der Abfrage 20 fortgefahren, wobei abgefragt wird, ob das Motormoment kleiner als ein Schwellwert (in Fig 1 als Schwelle 3 bezeichnet) ist, der insbesondere von der Fahrzeugbeschleunigung und der Steigung abhängig sein kann. Wenn das Motormoment kleiner ist als dieser Schwellwert, wird eine Umschaltung in dem Verfahrensschritt 14 vorgenommen. Ist das Motormoment größer als der Schwellwert, wird keine Umschaltung vorgenommen.

Es ist denkbar, dass bei der Abfrage 19 nicht das Motormoment, sondern eine proportionale Größe, insbesondere das Radmoment mit einem entsprechenden Schwellwert verglichen wird. Das Radmoment kann aus dem Motormoment und der Gesamtübersetzung gebildet werden. Die Gesamtübersetzung ergibt sich aus der Übersetzung des Automatikgetriebes und der Übersetzung des Verteilergetriebes und der Achsgetriebeübersetzung.

Außer eines losen Untergrundes können Beladung, Anhängerbetrieb oder das Befahren einer Steigung zu einem erhöhten Fahrwiderstand und damit höheren Motormomenten führen. Ziel des Verfahrens ist es, dass durch entsprechende Abfragen Umschaltverbote so gewählt werden, dass insbesondere ein Umschalten im tiefen Sand (loser Untergrund) bei zu geringer Geschwindigkeit verboten wird. Ferner wird ein Anhängerbetrieb in dem Verfahren 1 berücksichtigt. Eine Standardkennlinie kann zur Entscheidung des Umschaltverbotes gewählt werden. Ein Anhängerbetrieb kann durch eine zweite steilere Kennlinie berücksichtigt werden. Die ermittelte Steigung ist als dritte Achse in die beiden Momentenkennlinien eingefügt, so dass jeweils ein dreidimensionales Kennfeld entsteht.

### Bezugszeichenliste

- 1: Verfahren
- 2: Start
- 3: Abfrage - Taster betätigt
- 4: Abfrage - Geschwindigkeit > 0 km/h
- 5: Abfrage - Anhänger erkannt
- 6: Mindestbremsdruckkennlinie ohne Anhänger, Rückwärtsgang
- 7: Mindestbremsdruckkennlinie ohne Anhänger, Neutralstellung
- 8: Mindestbremsdruckkennlinie ohne Anhänger, Fahrstufe "Drive"
- 9: Mindestbremsdruckkennlinie mit Anhänger, Rückwärtsgang
- 10: Mindestbremsdruckkennlinie mit Anhänger, Neutralstellung
- 11: Mindestbremsdruckkennlinie mit Anhänger, Fahrstufe "Drive"
- 12: Abfrage - Bremsdruck größer als Mindestbremsdruck mit Anhänger
- 13: Abfrage - Bremsdruck größer Mindestbremsdruck ohne Anhänger
- 14: Verfahrensschritt - Umschaltung zulassen
- 15: Abfrage - Wählhebel in Fahrstellung "N", "D", "Tipptronic" ("M")
- 16: Abfrage - Geschwindigkeit kleiner als Grenzgeschwindigkeit
- 17: Abfrage - aktuelle Geschwindigkeit größer als steigungsabhängige Mindestgeschwindigkeit
- 18: Abfrage - Anhänger erkannt
- 19: Abfrage - Motormoment kleiner als Schwellwert mit Anhänger
- 20: Abfrage - Motormoment kleiner als Schwellwert ohne Anhänger
- 21: Verfahren

## Patentansprüche

1. Verfahren (1, 21) zur Steuerung und/oder Regelung eines zweistufigen Untersetzungsgetriebes eines Kraftfahrzeuges, wobei zwei Fahrstufen schaltbar sind, nämlich eine hohe Fahrstufe und eine niedrige Fahrstufe, wobei ein Schaltelement durch den Fahrer betätigt wird zum Umschalten von der hohen Fahrstufe in die niedrige Fahrstufe oder zum Umschalten von der niedrigen Fahrstufe in die hohe Fahrstufe, wobei eine Steigung des Fahruntergrundes ermittelt wird, wobei eine Fahrzeuggeschwindigkeit ermittelt wird, **dadurch gekennzeichnet, dass** eine Umschaltung erfolgt, wenn das Schaltelement betätigt wird und ein ermittelter Wert größer als ein von der Steigung des Fahruntergrundes abhängiger Mindestwert ist, wobei der ermittelte Wert ein Bremsdruck und/oder die Fahrzeuggeschwindigkeit ist.

2. Verfahren nach Anspruch 1, **dadurch gekennzeichnet, dass** wenn die Fahrzeuggeschwindigkeit nicht größer als null ist, ein Bremsdruck ermittelt wird und dass die Umschaltung erfolgt wenn der Bremsdruck größer als eine Mindestbremsdruckkennlinie (6, 7, 8, 9, 10, 11) ist, wobei die Mindestbremsdruckkennlinie (6, 7, 8, 9, 10, 11) von der Steigung des Fahruntergrundes abhängt.

3. Verfahren nach Anspruch 2, **dadurch gekennzeichnet, dass** abgefragt wird, ob ein Anhänger angehängt ist, wobei unterschiedliche Mindestbremsdruckkennlinien (6, 7, 8, 9, 10, 11) verwendet werden, je nachdem ob ein Anhänger angehängt ist oder nicht.

4. Verfahren nach einem der Ansprüche 2 oder 3, **dadurch gekennzeichnet, dass** das Kraftfahrzeug ein Automatikgetriebe mit mehreren Fahrstufen, insbesondere den Fahrstufen "Rückwärtsgang", "Neutral" und "Drive" aufweist, wobei in Abhängigkeit von der ausgewählten Fahrstufe im Automatikgetriebe unterschiedliche Mindestbremsdruckkennlinien (6, 7, 8, 9, 10, 11) verwendet werden.

5. Verfahren (1, 21) nach einem der vorstehenden Ansprüche **dadurch gekennzeichnet, dass** wenn die Fahrzeuggeschwindigkeit größer als null ist, die Umschaltung erfolgt wenn die Geschwindigkeit des Kraftfahrzeuges größer ist als eine von der Steigung des Fahruntergrundes abhängige Mindestgeschwindigkeit.

6. Verfahren nach einem dem Anspruch 5, **dadurch gekennzeichnet, dass** die steigungsabhängige Mindestgeschwindigkeit für Fahrten an einem Gefälle im wesentlichen gleich 0 km/h ist, und bei Fahrten an einem Anstieg durch eine monoton steigende Funktion gebildet ist.

7. Verfahren nach einem der Ansprüche 5 oder 6, **dadurch gekennzeichnet, dass** die Mindestgeschwindigkeit für Fahrten in der Ebene größer als 0 km/h ist.

8. Verfahren nach einem der vorstehenden Ansprüche, **dadurch gekennzeichnet, dass** zur Ermittlung der Steigung die Fahrzeugbeschleunigung bestimmt wird, wobei die Fahrzeugbeschleunigung von dem Messwert eines Längsbeschleunigungssensors abgezogen wird und das erhaltene Signal limitiert wird.

9. Verfahren nach einem der Ansprüche 5 bis 8, **dadurch gekennzeichnet, dass** eine manuelle Umschaltung bei der Fahrzeuggeschwindigkeit größer als null erfolgt, wenn ein Motormoment kleiner als ein Schwellwert ist.

10. Verfahren nach Anspruch 9, **dadurch gekennzeichnet, dass** der dem Motormoment zugeordnete Schwellwert von der Fahrzeugbeschleunigung und der Steigung abhängt.

11. Verfahren nach dem Anspruch 9 oder 10, **dadurch gekennzeichnet, dass** abgefragt wird, ob ein Anhänger angehängt ist, wobei ein Schwellwert für das Motormoment ohne Anhänger und ein weiterer Schwellwert für das Motormoment mit Anhänger verwendet werden.

## Claims

1. Method (1, 21) for performing open-loop and/or closed-loop control of a two-stage reduction gearbox of a motor vehicle, wherein two driving positions can be shifted, specifically a high driving position and a low driving position, wherein a shift element is activated by the driver in order to shift from the high driving position into the low driving position or to shift from the low driving position into the high driving position, wherein a gradient of the underlying surface is determined, wherein a vehicle speed is determined, **characterized in that** shifting occurs when the shifting element is activated and a determined value is higher than a minimum value which is dependent on the gradient of the underlying surface, wherein the predetermined value is a brake pressure and/or the vehicle speed.

2. Method according to Claim 1, **characterized in that** if the vehicle speed is not higher than zero, a brake pressure is determined, and **in that** the shifting occurs when the brake pressure is higher than a minimum brake pressure characteristic curve (6, 7, 8, 9, 10, 11), wherein the minimum brake pressure characteristic curve (6, 7, 8, 9, 10, 11) depends on the gradient of the underlying surface.

3. Method according to Claim 2, **characterized in that** it is interrogated whether a trailer is hitched, wherein different minimum brake pressure characteristic curves (6, 7, 8, 9, 10, 11) are used depending on whether a trailer is hitched or not.

4. Method according to one of Claims 2 or 3, **characterized in that** the motor vehicle has an automatic transmission with a plurality of driving positions, in particular the "reverse gear speed", "neutral" and "drive" driving positions, wherein different minimum brake pressure characteristic curves (6, 7, 8, 9, 10, 11) are used as a function of the selected driving position in the automatic transmission.

5. Method (1, 21) according to one of the preceding claims, **characterized in that** if the vehicle speed is higher than zero, the shifting occurs when the speed of the motor vehicle is higher than a minimum speed which is dependent on the gradient of the underlying surface.

6. Method according to Claim 5, **characterized in that** the gradient-dependent minimum speed is essentially equal to 0 km/h for journeys on a negative gradient, and is formed by a monotonously rising function on a positive gradient.

7. Method according to one of Claims 5 or 6, **characterized in that** the minimum speed for journeys on the flat is higher than 0 km/h.

8. Method according to one of the preceding claims, **characterized in that** in order to determine the gradient the vehicle acceleration is determined, wherein the vehicle acceleration is subtracted from the measured value of a longitudinal acceleration sensor, and the signal which is obtained is limited.

9. Method according to one of Claims 5 to 8, **characterized in that** manual shifting at the vehicle speed which is higher than zero occurs if an engine torque is lower than a threshold value.

10. Method according to Claim 9, **characterized in that** the threshold value which is assigned to the engine torque depends on the vehicle acceleration and the gradient.

11. Method according to Claim 9 or 10, **characterized in that** it is interrogated whether a trailer is hitched, wherein a threshold value for the engine torque without a trailer and a further threshold value for the engine torque with a trailer are used.

## Revendications

1. Procédé (1, 21) pour commander et/ou réguler un engrenage réducteur à deux rapports d'un véhicule automobile, deux rapports de transmission pouvant être sélectionnés, à savoir un rapport de transmission haut et un rapport de transmission bas, un élément de changement de rapport étant actionné par le conducteur pour changer du rapport de transmission haut au rapport de transmission bas ou pour changer du rapport de transmission bas au rapport de transmission haut, une pente du terrain de déplacement étant déterminée, une vitesse de véhicule étant déterminée, **caractérisé en ce qu'**un changement de rapport a lieu lorsque l'élément de changement de rapport est actionné et une valeur déterminée est supérieure à une valeur minimale dépendante de la pente du terrain de déplacement, la valeur déterminée étant une pression de freinage et/ou la vitesse de véhicule.

2. Procédé selon la revendication 1, **caractérisé en ce que** lorsque la vitesse de véhicule n'est pas supérieure à zéro, une pression de freinage est déterminée et **en ce que** le changement de rapport a lieu lorsque la pression de freinage est supérieure à une courbe caractéristique de pression de freinage minimale (6, 7, 8, 9, 10, 11), la courbe caractéristique de pression de freinage minimale (6, 7, 8, 9, 10, 11) étant dépendante de la pente du terrain de déplacement.

3. Procédé selon la revendication 2, **caractérisé en ce qu'**une interrogation est effectuée pour vérifier la présence ou non d'une remorque attelée, des courbes caractéristiques de pression de freinage minimale (6, 7, 8, 9, 10, 11) différentes étant utilisées en fonction de la présence ou non d'une remorque attelée.

4. Procédé selon la revendication 2 ou 3, **caractérisé en ce que** le véhicule automobile possède une boîte de vitesses automatique comportant plusieurs rapports de transmission, notamment les rapports de transmission « marche arrière », « point mort » et « conduite », des courbes caractéristiques de pression de freinage minimale (6, 7, 8, 9, 10, 11) différentes étant utilisées en fonction du rapport de transmission sélectionné de la boîte de vitesses automatique.

5. Procédé (1, 21) selon l'une des revendications précédentes, **caractérisé en ce que** lorsque la vitesse de véhicule est supérieure à zéro, le changement de rapport s'effectue lorsque la vitesse du véhicule automobile est supérieure à une vitesse minimale dépendante de la pente du terrain de déplacement.

6. Procédé selon la revendication 5, **caractérisé en ce que** la vitesse minimale dépendante de la pente pour les déplacements sur une pente descendante est sensiblement égale à 0 km/h et, lors des déplacements sur une pente ascendante, est formée par une fonction croissante monotone.

7. Procédé selon l'une des revendications 5 ou 6, **caractérisé en ce que** la vitesse minimale pour les déplacements sur terrain plat est supérieure à 0 km/h.

8. Procédé selon l'une des revendications précédentes, **caractérisé en ce que** l'accélération du véhicule est définie en vue de déterminer la pente, l'accélération du véhicule étant déduite de la valeur mesurée d'un capteur d'accélération longitudinale et le signal obtenu étant limité.

9. Procédé selon l'une des revendications 5 à 8, **caractérisé en ce qu'**un changement de rapport manuel en cas d'une vitesse de véhicule supérieure à zéro est effectué lorsqu'un couple du moteur est inférieur à une valeur de seuil.

10. Procédé selon la revendication 9, **caractérisé en ce que** la valeur de seuil associée au couple du moteur dépend de l'accélération du véhicule et de la pente.

11. Procédé selon la revendication 9 ou 10, **caractérisé en ce qu'**une interrogation est effectuée pour vérifier la présence ou non d'une remorque attelée, une valeur de seuil pour le couple du moteur sans remorque et une valeur de seuil supplémentaire pour le couple du moteur avec remorque étant utilisées.
